Europäisches Patentamt

European Patent Office

Office européen des brevets

(11) Veröffentlichungsnummer: **0 313 048**
**A2**

## (12) EUROPÄISCHE PATENTANMELDUNG

(21) Anmeldenummer: 88117491.6

(22) Anmeldetag: 20.10.88

(51) Int. Cl.⁴: **B28B 7/34**

(30) Priorität: 22.10.87 DE 3735806

(43) Veröffentlichungstag der Anmeldung:
26.04.89 Patentblatt 89/17

(84) Benannte Vertragsstaaten:
**AT BE CH FR IT LI LU NL**

(71) Anmelder: **Dittmann, Klaus**
**Kirchstrasse 10**
**D-8901 Kissing(DE)**

(72) Erfinder: **Dittmann, Klaus**
**Kirchstrasse 10**
**D-8901 Kissing(DE)**

(74) Vertreter: **Dr. Elisabeth Jung Dr. Jürgen**
**Schirdewahn Dipl.-Ing. Claus Gernhardt**
**P.O. Box 40 14 68 Clemensstrasse 30**
**D-8000 München 40(DE)**

(54) **Verfahren zur automatischen Herstellung von Sonderteilen aus Beton oder Stahlbeton.**

(57) Es wird ein Verfahren zur Herstellung von Sonderteilen aus Beton oder Stahlbeton beschrieben, bei dem die Negativform mittels eines cumputergesteuerten Arbeitskopfes, in den über einen Datenträger die dreidimensionalen Gestaltungsmerkmale des betreffenden Sonderteils eingespeist werden, aus einer Modelliermasse mit einem Schmelzpunkt oberhalb 50 °C herausgearbeitet und dann mit der Betonmasse gefüllt wird. Die herausgearbeitete Modelliermasse kann anschließend mit der Hauptmasse durch Aufschmelzen vereinigt werden und steht dann für einen neuen Arbeitsgang zur Verfügung.

Fig. 1

Schnitt 5-5

EP 0 313 048 A2

## Verfahren zur automatischen Herstellung von Sonderteilen aus Beton oder Stahlbeton

Aufgrund des bestehenden und noch zunehmenden Facharbeitermangels verlagert sich die Produktion in der Bauwirtschaft zunehmend in Fertigteilwerke, wo in witterungsgeschützten Hallen mit entsprechenden Sozialeinrichtungen Stahlbetonteile unterschiedlichster Abmessungen vorgefertigt werden, welche auf der Baustelle nur noch durch geeignete Verbindungen zusammengefügt werden.

Mit zunehmender Individualität der Architektur erhöht sich gleichermaßen die Zahl der sogenannten Sonderteile aus Stahlbeton, wie beispielsweise
- Balkonplatten
- Podestplatten
- Brüstungen
- Attiken
- Gauben
- Konsolen
- Balken
- Stützen, Treppen, Fassaden, usw.

Diese Teile werden zur Zeit dergestalt hergestellt, daß auf einer ebenen Fläche, einem sogenannten Schaltisch, eine Negativform des herzustellenden Teiles, vorzugsweise aus einem formverleimten Sperrholz oder Stahl, gebaut wird. Diese angeführten Negativformen werden individuell für die jeweils herzustellenden Fertigteile gebaut und können nach Fertigstellung einer Serie von z.B. Balkonplatten einer bestimmten Abmessung nicht mehr für andere Teile verwendet werden und müssen zerstört werden.

Mit zunehmender Individualität und daraus resultierenden mehr und mehr kleineren Serien erhöht sich der Anteil des Schalungsbaus teilweise bis auf 80% der gesamten Herstellungskosten. Außerdem steht eine ausreichende Anzahl von geeigneten Spezialisten zur Herstellung solcher Negativformen schon heute nicht mehr zur Verfügung.

Es besteht daher das dringende Bedürfnis und damit die Aufgabe, einerseits den Schalkostenanteil deutlich zu senken, andererseits den gesamten Schalungsbau zu automatisieren.

Diese Aufgabe wird durch das erfindungsgemäße Verfahren gelöst.

Das erfindungsgemäße Verfahren zur Herstellung von Sonderteilen aus Beton oder Stahlbeton ist dadurch gekennzeichnet, daß man aus einer mechanisch bearbeitbaren wachsartigen Modelliermasse mit einem Schmelzpunkt oberhalb 50° C mittels eines cumputergesteuerten Arbeitskopfes, in welchen über einen Datenträger die dreidimensionalen Gestaltungsmerkmale des Sonderteils eingespeist werden, die Negativform durch Abtragen der Modelliermasse herausarbeitet und dann diese Form auf einem Schaltisch in üblicher Weise bewehrt und mit Betonmasse befüllt, worauf man die Betonmasse erhärten läßt und dann das Sonderteil aus der Negativform heraushebt.

Gemäß einer bevorzugten Ausführungsform verformt man die wachsartige Modelliermasse auf einem Schaltisch mit rundumlaufender Aufkantung innerhalb der so gebildeten, nach oben offenen Schachtel durch Aufschmelzen und Erstarrenlassen zu einem blockartigen Gebilde und arbeitet dann aus diesem Block direkt auf dem Schaltisch die Negativform heraus.

Dabei ist es zweckmäßig, während des Herausarbeitens der Negativform, das anfallende überschüssige Material der Modelliermasse abzusaugen, beispielsweise durch einen Schlauch, und einem Vorratsbehälter zuzuführen.

Gemäß einer weiteren bevorzugten Ausführungsform kann man das im Vorratsbehälter gesammelte überschüssige Material der Modelliermasse nach der Herstellung der Negativform und dem Herausheben des Sonderteils aus dieser Negativform zusammen mit der auf dem Schaltisch verbliebenen Modelliermasse auf schmelzen und dann zu einem blockartigen Gebilde erstarren lassen. Aus diesem kann dann eine weitere Negativform gebildet werden.

Zum Aufschmelzen der Modelliermasse verwendet man zweckmäßig Heizelemente, welche unterhalb und/oder oberhalb des Schaltisches angeordnet sind. Dabei kann das Aufschmelzen mindestens zum Teil auch durch oberhalb des Schaltisches angeordnete Heizstrahler erfolgen.

Als cumputergesteuerten Arbeitskopf zum Herausarbeiten der Negativform setzt man vorzugsweise einen Robot ein, welcher Fräs-, Schneide-, Span- und/oder Sägefunktionen ausführt.

Gemäß einer besonders zweckmäßigen und arbeitsgünstigen Ausführungsform setzt man im erfindungsgemäßen Verfahren einen cumputergesteuerten Arbeitskopf ein, welcher mittels einer selbstfahrenden Portalkonstruktion über der Modelliermasse beweglich angeordnet ist.

Als Modelliermasse eignet sich im Verfahren gemäß der Erfindung jede Masse mit einem Schmelzpunkt oberhalb 50° C. Insbesondere eignet sich für diesen Zweck ein Kohlenwasserstoffwachs, Stearin, ein teilsynthetisches oder ein vollsynthetisches Wachs, beispielsweise ein Polyäthylenwachs.

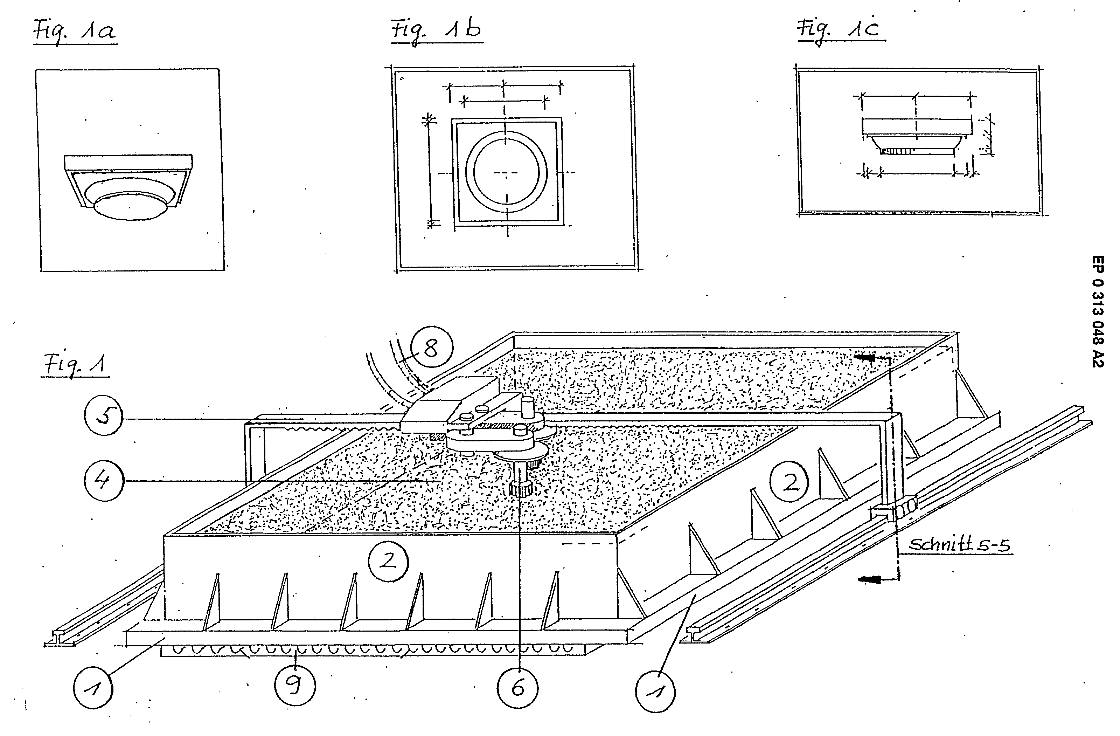

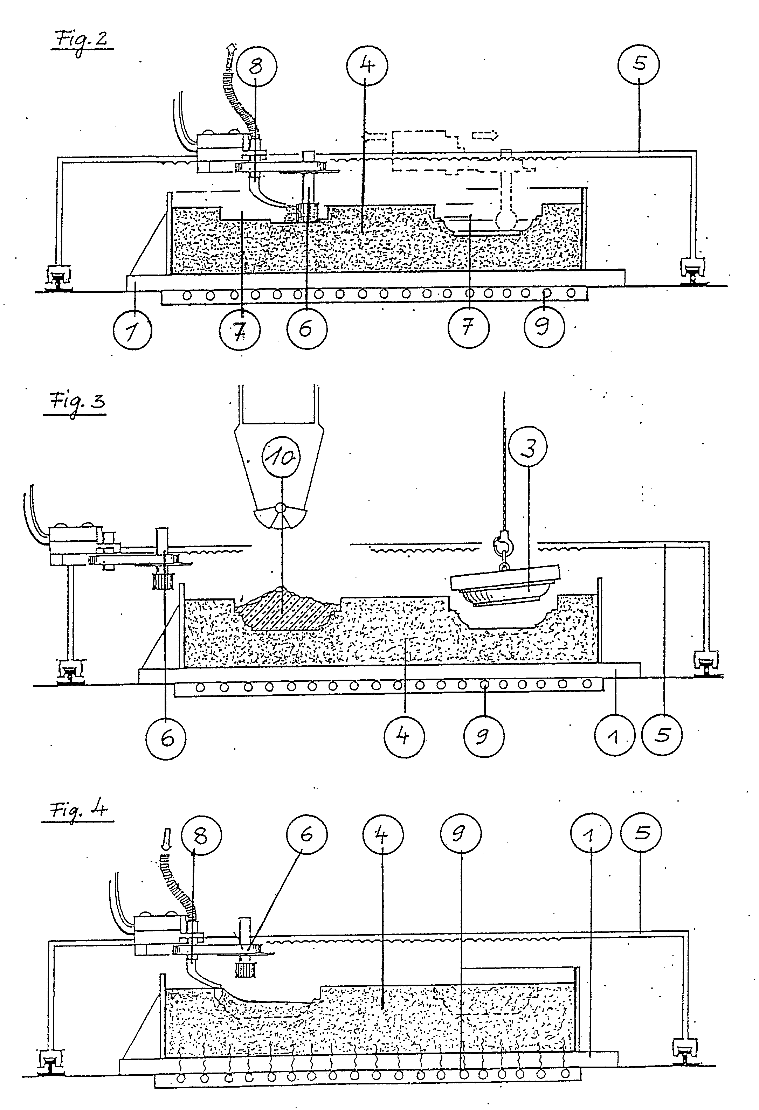

Die Erfindung wird anhand der Figuren 1, 1a bis 1c, 2, 3 und 4 näher erläutert, mittels deren der Ablauf des Verfahrens mit den einzelnen Aggregaten dargestellt wird.

Fig. 1a zeigt als Beispiel eines herzustellenden Sonderteils ein Säulenkapitell, die Figuren 1b und 1c stellen die für die Herstellung der Negativformen erforderlichen Zeichnungen des Architekten oder Ingenieurs dar, nämlich einen Horizontalschnitt und einen Aufriß des Kapitells.

Fig.1 zeigt einen Schaltisch (1) mit umlaufender Aufkantung (2), der mit geeigneter Modelliermasse, wie einem Wachs (4), gefüllt und einsatzbereit ist. Die Daten des herzustellenden Sonderteils , Z.B. des in den Figuren 1a bis 1c dargestellten Säulenkapitells, werden in einen Arbeitskopf (6) eingegeben. An der Portalkonstruktion (5) hängt dieser Arbeitskopf (6) in Ruhestellung. Außerdem ist ein Schlauch (8) zur Absaugung des überflüssigen Materials der Modelliermasse angeschlossen. Unter dem Schaltisch (1) ist ein Heizregister (9) angeordnet.

Fig.2 zeigt einen Schnitt längs der Portalkonstruktion (5-5) von Fig.1.
In der linken Hälfte der Figur ist dargestellt, wie der allseits bewegliche Arbeitskopf (6) mit der Herstellung der Negativform (7) begonnen hat. Die fertig aus der Modelliermasse(4) ausgenommene Negativform (7) ist im rechten Teil dieser Figur sichtbar. Das überflüssige Material der Modelliermasse (4) wird über eine Vorrichtung (8) abgesaugt.

Fig.3 zeigt wiederum einen Schnitt längs der Portalkonstruk tion (5-5) von Fig.1.
In der linken Hälfte der Figur wird die herausgearbeitete Negativform (7) mit Beton (10) gefüllt. In der rechten Figurenhälfte ist dargestellt, wie das erhärtete Sonderteil mittels eines Hallenkrans aus der Negativform (7) herausgehoben wird.

Fig.4 zeigt gleichfalls einen Schnitt längs der Portalkonstruktion (5-5) von Fig.1.
Das Sonderteil ist aus der Negativform (7) vollständig entfernt worden. Die Heizregister (9) sind eingeschaltet und das überflüssige Material der Modelliermasse (4) wird über die Absaugvorrichtung (8) wieder zugegeben und beginnt sich zu verflüssigen. Nach Abschalten der Heizregister (9) erkaltet die Modelliermasse (4) zu einem blockartigen Gebilde, und es tritt wieder der in Fig.1 dargestellte Zustand ein.

Das erfindungsgemäße Verfahren wird nachstehend näher erläutert.
Auf einem Schaltisch (1) aus Stahl o.ä. mit Abmessungen, die ber das größte Maß der herzustellenden Sonderteile hinausgehen, wird umlaufend eine Aufkantung (2) aus Stahl o.ä. in größerer Höhe als die größte Dicke des herzustellenden Sonderteils fest angebracht, so daß der Schaltisch (1) die Form einer nach oben offenen Schachtel annimmt. Der Schaltisch ist fest auf Fundementen verankert; er kann jedoch auch fahrbar, z.B. auf Reibbrädern, Schienen usw. ausgebildet werden.

Auf diesem nunmehr schachtelförmigen Schaltisch (1) wird bis zur Höhe der Aufkantung (2) eine Modelliermasse (4), z.B. Wachs, Stearin o.a., aufgebracht, die u.a. folgende physikalische Eigenschaften besitzt:
Bei Normaltemperaturen zwischen 10 und 50°C ist sie ausreichend hart, um den Betondruck aufzunehmen;
sie eignet sich für Spanen, Fräsen, Sägen, Schneiden oder ähnliche mechanische Behandlungen;
sie schmilzt oder verflüssigt sich bei deutlich über 50°C liegenden Temperaturen.

Über dem Schaltisch (1) ist zweckmäßig eine selbstfahrende Portalkonstruktion (5) angeordnet. Diese kann sich auch auf der seitlichen Aufkantung (2) des schachtelförmigen Schaltisches (1) befinden oder über dem Schaltisch (1) hängend angeordnet sein. Diese Portalkonstruktion (5) kann in einer Richtung, gewöhnlich der Längsrichtung, über den Schaltisch (1) fahren, z.B. mittels elektrischem Antrieb.

An der Portalkonstruktion ist ein Fräs-, Schneid-, Span-, Säge- o.ä. Arbeitskopf (6) derart aufgehängt, daß er sich Z.B. pneumatisch, hydraulisch oder auf andere Weise in alle Richtungen bewegen läßt, also seitlich, in Höhe bzw. Tiefe.

Der Arbeitskopf (6) ist computergesteuert, d.h. die sich aus den Plänen des Architekten für das Sonderteil aus Beton ergebenden Abmessungen werden beispielsweise über Datenträger eingelesen.

Der so gesteuerte Arbeitskopf (6) nimmt nunmehr durch Fräsen-Spanen-Sägen-Schneiden usw. aus der auf dem schachtelförmigen Schaltisch (1) aufgebrachten Modelliermasse (4), wie Stearin o.a., Material derart aus, daß in der Modelliermasse 4) die Negativform (7) des herzustellenden Sonderteils (3) entsteht.
Das während des Ausnehmungsvorganges anfallende überflüssige Material der eingesetzten Modelliermasse (4) wird über eine geeignete Vorrichtung (8), z.B. einen Schlauch, abgesaugt und einem Vorratsbehälter zugeführt.

Die nunmehr entstandene Negativform (7) wird wie üblich bewehrt und mit Betonmasse (10)befüllt.

Nach Erhärten des Sonderteils (3) wird dieses wie üblich mittels Hallenkran o.ä. aus der Negativform (7) gehoben.

Danach wird das abgesaugte Material (8) der Modelliermasse aus dem Vorratsbehälter wieder in die Negativform (7) zurückgeführt.

Unter dem Schaltisch (1) und an diesem befestigt ist ein Heizregister (9), welches beispielsweise mit Dampf, Thermalöl o.ä. die Stahlflächen des Schaltisches (1) derart aufheizt, daß die verwendete Modelliermasse sich verflüssigt und mit dem aus dem Vorratsbehälter (8) zurückgeführten Material (4) eine innige Verbindung eingeht.

Das gleiche kann auch mit anderen Heizungen, z.B. über dem Schaltisch (1) hängenden Heizstrahlern oder in Verbindung mit diesen erreicht werden.

Nach Abschalten der Heizungen (9) und Erkalten der Modelliermasse (4) kann neuerlich ein beliebiges Sonderteil hergestellt werden.

Die Vorteile des Verfahrens liegen darin, daß jetzt nach einer einmalig getätigten Investition jedes beliebige Sonderteil, ohne Rücksicht auf irgendwelche Serien, ohne spezielle Fachkenntnisse und ohne jeglichen Schalungsbau exakt und ohne Übertragungsfehler vom Plan des Architekten automatisch in kürzester Zeit geschalt werden kann. Desgleichen kann die Modelliermasse wiederverwendet werden, so daß bis auf den üblichen Schwund keinerlei Materialverluste anfallen.

Der Wunsch nach höheren Stückzahlen kann leicht dadurch erfüllt werden, daß anstelle nur eines festen Schaltisches eine Reihe solcher Tische fahrbar ausgebildet werden und zur Bearbeitung unter die Portalkonstruktion mit dem Arbeitskopf gebracht werden.

Bezugzeichen

(1) - Schaltisch aus Stahl o.ä.
(2) - Umlaufende Aufkantung aus Stahl o.ä.
(3) Beispiel eines Sonderteils
(4) - Modelliermasse
(5) - Selbstfahrende Portalkonstruktion
(6) - Allseits beweglicher Arbeitskopf
(7) - Durch den Arbeitskopf hergestellte Negativform
(8) Absaugvorrichtung für überflüssigen Werkstoff
(9) - Heizregister
(10) - Betoniervorgang

**Ansprüche**

1. Verfahren zur Herstellung von Sonderteilen aus Beton oder Stahlbeton, dadurch gekennzeichnet, daß man aus einer mechanisch bearbeitbaren wachsartigen Modelliermasse mit einem Schmelzpunkt oberhalb $50 °C$ mittels eines cumputergesteuerten Arbeitskopfes, in welchen über einen Datenträger die dreidimensionalen Gestaltungsmerkmale des Sonderteils eingespeist werden, die Negativform durch Abtragen der Modelliermasse herausarbeitet und dann diese Form auf einem Schaltisch in üblicher Weise bewehrt und mit Betonmasse befüllt, worauf man die Betonmasse erhärten läßt und dann das Sonderteil aus der Negativform heraushebt.

2. Verfahren nach Anspruch 1, dadurch gekennzeichnet, daß man die wachsartige Modelliermasse auf einem Schaltisch mit rundumlaufender Aufkantung innerhalb der so gebildeten, nach oben offenen Schachtel durch Aufschmelzen und Erstarrenlassen zu einem blockartigen Gebilde verformt und aus diesem Block direkt auf dem Schaltisch die Negativform bildet.

3. Verfahren nach Anspruch 1 und 2, dadurch gekennzeichnet, daß man das während der Herausarbeitung der Negativform anfallende überschüssige Material der Modelliermasse absaugt und einem Vorratsbehälter zuführt.

4. Verfahren nach Anspruch 2 und 3, dadurch gekennzeichnet, daß man das im Vorratsbehälter gesammelte überschüssige Material der Modelliermasse zusammen mit der Negativform aufschmilzt und zu einem blockartigen Gebilde erstarren läßt, aus dem eine weitere Negativform gebildet wird.

5. Verfahren nach Anspruch 1 bis 4, dadurch gekennzeichnet, daß man die Modelliermasse mittels Heizelementen zum Schmelzen bringt, welche unterhalb und/oder oberhalb des Schaltisches angeordnet sind.

6. Verfahren nach Anspruch 5, dadurch gekennzeichnet, daß das Aufschmelzen mindestens zum Teil durch oberhalb des Schaltisches angeordnete Heizstrahler erfolgt.

7. Verfahren nach Anspruch 1 bis 6, dadurch gekennzeichnet, daß man als cumputergesteuerten Arbeitskopf einen Robot einsetzt, welcher Fräs-, Schneide-, Span- und/oder Sägefunktionen ausführt.

8. Verfahren nach Anspruch 1 bis 7, dadurch gekennzeichnet, daß man einen cumputergesteuerten Arbeitskopf einsetzt, welcher mittels einer selbstfahrenden Portalkonstruktion über der Modelliermasse beweglich angeordnet ist.

9. Verfahren nach Anspruch 1 bis 8, dadurch gekennzeichnet, daß man als Modelliermasse ein Kohlenwasserstoffwachs, Stearin, ein teilsynthetisches oder ein vollsynthetisches Wachs verwendet.

10. Verfahren nach Anspruch 9, dadurch gekennzeichnet, daß man als Modelliermasse ein Polyäthylenwachs verwendet.

Fig. 1a  Fig. 1b  Fig. 1c

Fig. 1

Schnitt 5-5

EP 0 313 048 A2

Fig. 2

Fig. 3

Fig. 4